# EUROPEAN PATENT SPECIFICATION

(11) **EP 0 739 277 B1**
(45) Date of publication and mention of the grant of the patent: **29.07.1998**
(21) Application number: 95906576.4
(22) Date of filing: 05.01.1995
(51) Int. Cl.: B60K 17/36

(54) **VEHICLE-DRIVING WHEEL BOGIE AND A HYDRAULIC MOTOR-DRIVEN DRIVING ROLLER FOR SUCH A WHEEL BOGIE**
DREHGESTELL FÜR FAHRZEUGANTRIEBSRAD UND HYDRAULISCH ANGETRIEBENE LAUFROLLE FÜR EIN SOLCHES DREHGESTELL
BOGIE A ROUES MOTRICES POUR VEHICULE ET GALET D'ENTRAINEMENT COMMANDE PAR MOTEUR HYDRAULIQUE POUR UN BOGIE DE CE TYPE

(30) Priority: 11.01.1994 SE 9400044
(43) Date of publication of application: 30.10.1996
(73) Proprietor: ALFTA GALLRINGSTEKNIK AB, 820 95 Viksjöfors (SE)
(72) Inventor: LINDBLOM, Thore, S-822 91 Alfta (SE); DANIELSSON, Anders, S-820 67 Enänger (SE); LARSSON, Sune, S-822 92 Alfta (SE)
(74) Representative: Johansson, Lars E.
(86) International application number: SE9500006
(87) International publication number: WO9518723

(56) References cited:
- GB-A- 1 231 180
- GB-A- 1 461 547
- US-A- 4 016 946

## Description

### Technical Field of the Invention

In a first aspect, this invention relates to a vehicle-driving wheel bogie comprising a pair of wheels which have tread-designed tyres and each of which is rotatably mounted in bearings on a wheel-carrying part, for instance a box girder, which is pivotable via a joint relative to a chassis or frame body, the wheels being drivable in either one of two opposed directions of rotation and a hydraulic motor serving as the permanent and sole common driving mechanism for said two wheels, which motor is placed in the region between the tyres of the wheels and has its output shaft connected to a driving roller with a plurality of peripherically separate carrier elements being in a driving engagement with the surface design of each one of the two wheel tyres. Such wheel bogies are well-known.

### Prior Art

In practice, vehicles with driving wheel bogies may be in the form of waist-steered forwarders which have a front section carrying a driving compartment and a combustion engine, and a rear section comprising a load carrier in the form of a set of bunks and posts suited to accomodate logs or tree trunks. Not rarely, such vehicles comprise four wheel bogies altogether, namely one bogie pair below the front, compartment-carrying section and one pair below the rear, load-carrying section, all bogies being capable of driving. In connection with previously known four-point-driven vehicles of this sort, it is common that each one of the two wheels in each one of the bogies is driven by means of an own hydraulic motor, implying that the vehicle requires no less than eight hydraulic motors. This does not only mean that the total cost for the driving of the vehicle becomes comparatively high, but also that complicated differential mechanisms for the regulation of the oil flows to the different motors are required in order to guarantee the desired running characteristics of the vehicle. These mechanisms are complicated and costly per se.

### Objects and Features of the Invention

In a first aspect, the present invention aims at setting aside the above mentioned inconveniences of previously known wheel bogies and providing a bogie whose duty is simple and inexpensive. Thus, a primary object of the invention in this aspect is to provide a vehicle-driving wheel bogie that requires only one hydraulic motor. A further object of the invention is to provide a wheel bogie which, in spite of the use of merely one hydraulic motor, gives good running characteristics to the vehicle during operation.

According to the invention, the above objects are attained by the features that are defined in the characterizing clause of claim 1. Further, preferred embodiments of the wheel bogie according to the invention are defined in the dependent claims 2 to 4.

### Further Elucidation of Prior Art

In US-A-4 016 946 a driving arrangement is disclosed for two tyres with a tread design included in a vehicle, which arrangement has the form of a driving roller comprising a plurality of peripherically separate carrier elements that are in engagement with the surface design of the tyres. However, in this case the driving roller is placed along a fictive connection line between the centres of rotation of the two wheels. This leads to that the tractive forces on the two wheels are unequally distributed. Further, the gripping power between the driving roller and the tyre deteriorates gradually as the tread design of the tyre is worn.

Further, it is known to use a hydraulic motor-driven driving roller as a mechanical auxiliary drive for wheel bogies on cross-country vehicles, which roller may be brought into driving engagement with the tyres of the two bogie wheels when necessary. In this case, the driving roller is a cylindrical drum made of sheet-metal arranged in the extension of the output shaft of the hydraulic motor, on the outside of which drum are arranged protruding beads with the purpose of gripping into the surface design of the tyre, the motor and the driving roller being mounted at the free end of an operating arm which is pivotable relative to the wheel carrying part. More specifically, this operating arm is held in a position pointing obliquely upwardly from the wheel carrying part, from which position it may, when necessary, be turned by means of a special hydraulic cylinder down to a position in which the beads serving as carrier elements on the outside of the drum may grip into the design of the two tyres. However, such driving rollers are then just used as an auxiliary drive, in that the wheel bogies in question otherwise are undriven. The ordinary drive of the vehicle has another form, primarily consisting of hydraulic motors mounted in simple driving wheels or alternatively wheel bogies in another section of the vehicle than the section in which the bogies with an auxiliary drive are included. Thus, in vehicles of this sort the skilled man has not relied on said driving roller as the permanent and sole drive for the vehicle in its entirety. Contrary to this, the driving roller according to the present invention is mounted in connection to a wheel bogie which always drives the vehicle and constitutes the only drivning mechanism for the two wheels of this bogie. Furthermore, according to the present invention the driving roller and the hydraulic motor are mounted on an arm which is certainly pivotable, but which is vertically positioned and whose joint is located on a level below the rotation centres of the bogie wheels, contrary to the driving roller of the known auxiliary drive, whose operating arm is pivotably connected to the wheel-carrying part at a point situated at a level above the rotation centres of the wheels.

Another disadvantage of the previously known auxiliary drive is that the driving roller has the form of a drum with a bead, which drum extends in the extension of the output shaft of the hydraulic motor. This implies that the total built-in length of the motor and the driving roller becomes large; something that complicates the construction of the bogie in general. Besides, soil and other impurities may easily deposit on the outside of the drum, into the spaces between adjacent beads, thereby deteriorating the engagement of the beads with the design of the tyre; something that in worst case may lead to skidding of the driving roller against the tyre.

### Further Objects and Characteristics of the Invention

In a second aspect, the invention aims at obviating the latter inconveniences of the known driving roller and providing a hydraulic motor-driven driving roller for any wheel bogies, which roller on one hand requires a minimal building-in space and on the other hand guarantees a good gripping relative to the wheel tyres, also at severe outer conditions. Thus, a primary object of the invention in this aspect is to provide a driving roller whose carrier elements are kept free from soil and the like. A further object is to provide a driving roller whose carrier elements require a minimum of space besides the space that is anyway required by the hydraulic motor per se.

According to the invention, said objects are achieved by the features as defined in claims 5 to 7.

### Brief Description of the Appending Drawings

In the drawings
- Fig. 1: is a schematic side-view showing a cross-country vehicle with wheel bogies according to the invention,
- Fig. 2: is a planar view showing the frame-work parts for a bogie pair included in the vehicle,
- Fig. 3: is a vertical section showing the frame-work parts according to figure 2 in the area of the driving roller in question,
- Fig. 4: is an enlarged detail-section D (see figure 3) illustrating a joint shaft which is common for a wheel-carrying part and a motor-holding arm,
- Fig. 5: is a side-view of a driving roller according to the invention,
- Fig. 6: is an enlarged longitudinal section through the driving roller according to figure 5, and
- Fig. 7: is a planar view from above showing the engagement of the driving roller with two wheel tyres comprised in a bogie.

### Detailed Description of a Preferred Embodiment of the Invention

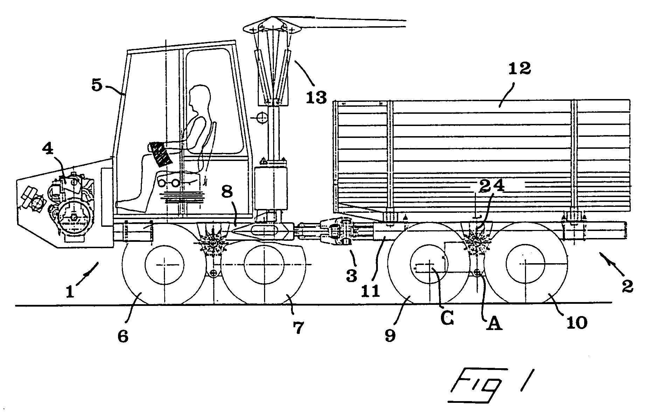

Fig. 1 shows a cross-country, waist-steered vehicle comprising front and rear sections 1 and 2, respectively, which are interconnected in a conventional manner by a main joint 3. The front vehicle section 1 comprises a combustion engine 4 and a compartment 5. The section in question is carried by two wheel bogies, of which only one is visible in figure 1. The wheels in this bogie are designated 6 and 7. The two bogies together carry a chassis or a frame body 8.

In an analogous way, also the rear vehicle section 2 comprises a pair of wheel bogies, of which only one is visible in figure 1. The wheels in this visible bogie are designated 9 and 10, respectively. The two rear wheel bogies together carry a rear frame body designated 11. In turn, this body carries a load carrier in the form of two loading bunks with associated posts intended to receive a load designated 12 in the form of tree logs or trunks. The vehicle also comprises a crane 13.

In figure 1 the vehicle is shown from its left side. The wheels which are visible in the figure and which are designated 6, 7, 9, 10, are equivalent to wheels on the right side of the vehicle which are designated by the same reference numerals, although these have a prime sign.

In practice, the two frame bodies 8, 11 advantageously consist of simple, centrally placed box girders.

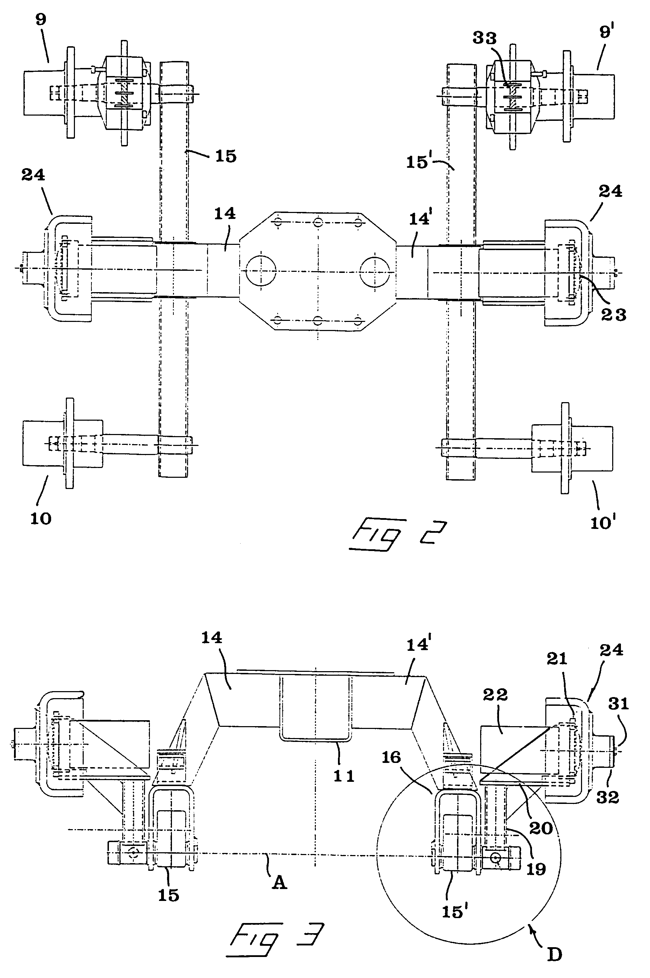

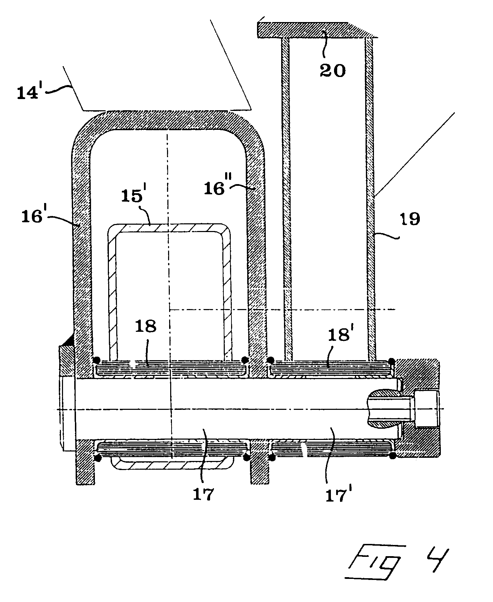

Reference is now made to figures 2 and 3 which jointly illustrate how for instance the rear frame body or box girder 11 carries a pair of wheel-carrying parts 15, 15' via two cross pieces 14, 14'. In practice, also these wheel-carrying parts may consist of suitably formed box girders. These are pivotable relative to the otherwise rigid frame body via a joint construction further described below, whose geometrical axis is designated A. As shown to the right in figure 3, each cross piece 14' carries a U-shaped yoke 16 opening downwardly, which in addition to an upper piece comprises two mutually separated legs 16', 16'' (see also figure 4). The distance between these legs is larger than the width of box girder 15', whereby this box girder can be accomodated between the legs. A lying or horizontal shaft journal 17 is mounted in holes in the lower portions of the legs, the length of which journal being larger than the distance between the legs, whereby an outer portion 17' of the journal will protrude a bit from the outer leg 16'' of the yoke 16. A piece of pipe 18, being fixedly connected to box girder 15', is in a suitable way mounted in bearings outside the inner portion of journal 17. An arm designated 19 is welded upon an analogous piece of pipe 18', which arm points substantially vertically and upwardly from the journal. Also pipe 18' is in a suitable manner mounted in bearings relative to the journal, whereby arm 19 is freely pivotable around the journal. At its upper end, arm 19 is connected to a lying fastening plate 20 which in turn has an upright mounting plate 21 at an outer end. On this plate, a hydraulic motor designated 22 is fastened, more specifically on the inside of the plate in question. In a usual manner, hydraulic motor 22 has an output shaft 23 that is reversable, i.e., it may be driven in either one of two opposed directions of rotation by suitable control of the oil flows to the motor.

A driving roller 24 is connected to the output shaft of the motor, the form of the roller being clear in an enlarged scale from figures 5 and 6. More specifically, the driving roller comprises a plurality of carrier elements in the form of substantially L-formed fingers 25, each one of which having a radial leg 26 and an axial leg 27. Each radial leg 26 is connected to a hub construction which is common for all fingers and connected to the output shaft of the motor, and according to the example comprises on one hand a hub casing 28 and on the other hand a ring plate 29 which protrudes radially from said hub casing. Each finger 25 is welded to plate 29 via its radial leg 26, which plate in turn is welded to the outside of hub casing 28. On the inside of casing 28 is formed a wedge-shaped groove 30 intended to cooperate with a corresponding wedge on the output shaft of the hydraulic motor. The hub casing is held in place on the output shaft by means of a locking screw 31 (see figure 3) and its associated stop washer 32. In particular, it should be noted that the axial legs 27 of the fingers extend in a direction rearwardly from the associated radial legs, whereby these axial legs jointly form a cage-like configuration which at least partly encases motor 22. As may be seen in figure 5, the number of fingers may amount to twelve, the fingers being equidistantly separated by a pitch of 30°. In practice, fingers 25 may advantageously be made of bent round bar. More specifically, this round bar should be bent in a smoothly rounded bend at the transition between the axial and radial leg, besides which also the free end of the axial leg should be shaped into a round, edge-free form.

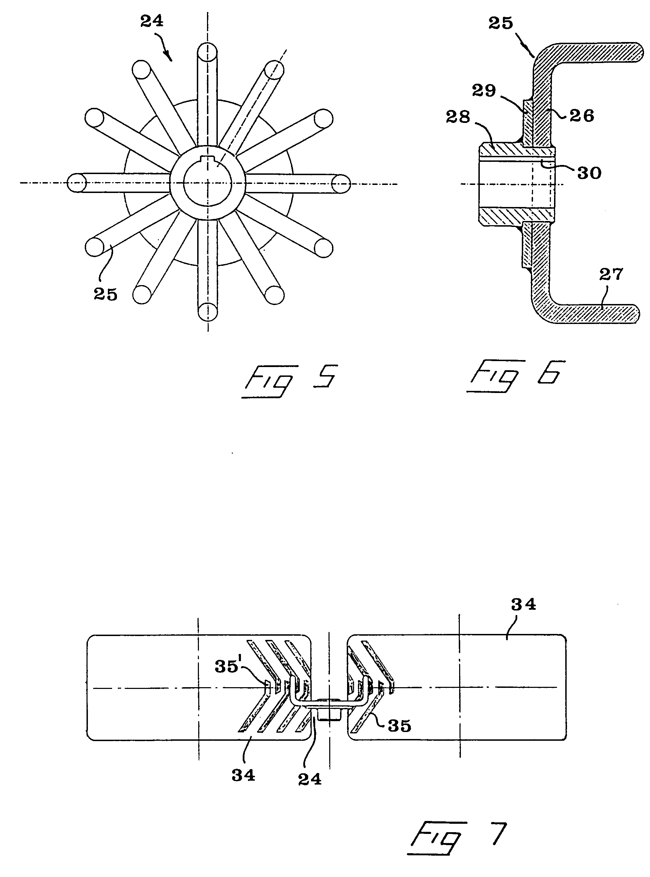

Reference is again made to figure 2 which shows how box girder 15' in the region of its opposed ends carries wheel drums for the wheels 9', 10' which form the rear right wheel bogie of the vehicle. In practice, tyres 34 of rubber are mounted on the wheel drums (see figure 7). In one of the two wheel drums, also a brake device 33 is included, for instance a disc brake. In figure 7, the rubber tyres in question are meant to be placed upon the wheel drums shown in figure 2. As may be clearly seen in figure 7, the tyres have suitable surface designs in a usual manner. These designs include a series of ribs 35 and grooves between these ribs, the ribs having central portions 35' which extend substantially axially. The axial finger legs 27 of driving roller 24 engage into the grooves between these central rib portions 35'. More specifically, at least one finger leg is always in a cog-like engagement with the tyre design.

According to the invention, the joint being formed by journal 17 or the geometrical axis A is situated at a level below a fictive line of connection between the centres of rotation C of the vehicle wheels, as illustrated in figure 1. At the same time, driving roller 24 is placed at a level above said line of connection. The reason for this placement is the following. During driving, a tractive force relative to the ground is conferred to the two wheels of the bogie, which force gives a moment around axis A that increases with the vertical distance between axis A and the ground. The bogie endeavours to "run away" from the vehicle and in this way it brings about a transfer of weight to the rear wheel as seen in the direction of travel, at the same time as the front wheel becomes lighter to the same extent. A weight distribution as even as possible is desirable. On one hand, an absolutely even weight distribution would be attained when the distance between axis A and the ground would be zero. On the other hand, the weight distribution would be extremely large if axis A were situated near to or coinciding with the axis of rotation of driving roller 24. According to the invention, a compromise has been chosen between these two extremes, the bearing point or axis A having been placed as low as possible, having regard to the free wheel height and cross-country passability; more specifically at a certain distance below the horizontal plane in which the centres of rotation C of the vehicle wheels are located.

## Claims

1. A vehicle-driving wheel bogie comprising a pair of wheels (9, 10) which have tread-designed tyres and each of which is rotatably mounted in bearings on a wheel-carrying part (15, 15'), for instance a box girder, which is pivotable via a joint relative to a chassis or frame body (8, 11), the wheels being drivable in either one of two opposed directions of rotation and a hydraulic motor (22) serving as the permanent and sole common driving mechanism for said two wheels, which motor is placed in the area between the tyres of the wheels and has its output shaft (23) connected to a driving roller (24) with a plurality of peripherically separated carrier elements (25) being in a driving engagement with the surface designs of each one of the two wheel tyres, **characterized** in that the hydraulic motor (22) and the driving roller (24) are mounted in the region of an upper end of a substantially vertically positioned, pivotable holding arm (19), which in the region of its lower end is articulatedly connected to said frame body (11) in a joint (17) located at a level below the centres of rotation of the wheels (9, 10).

2. Wheel bogie according to claim 1, **characterized** in that the joint for the holding arm (19) and the joint for the wheel carrying part (15) are located along a common geometrical axis (A) that is fixed relative to the frame body (11), the arm (19) being placed outside the wheel-carrying part (15).

3. Wheel bogie according to claim 2, **characterized** in that the frame body comprises a U-shaped yoke (16) that opens downwardly and has two mutually separate legs (16', 16'') between which is accomodated a box girder (15') forming the wheel-carrying part, which box girder is carried by and pivotably mounted in bearings relative to a shaft journal (17) placed between said U-legs, the length of the journal (17) being larger than the distance between the legs in order to provide a portion (17') protruding from the outer leg (16''), on which portion the holding arm (19) is pivotably mounted in bearings.

4. Wheel bogie according to claim 2 or 3, **characterized** in that the holding arm (19), at its upper end, has a lying fastening plate (20) with an upright mounting plate (21) on which the hydraulic motor (22) is fastened in a lying position, in which the output shaft (23) of the motor protrudes from the mounting plate (21) in order to carry the driving roller (24) at its free end.

5. A hydraulic motor-driven driving roller for wheel bogies of the type that comprises two wheels with tyres having a surface design, the driving roller including a plurality of peripherically separated carrier elements (25) for engagement with the surface design of the tyres and being co-rotatively connected to the output shaft (23) of a hydraulic motor (22), **characterized** in that the carrier elements consist of substantially L-formed fingers (25), each one of which having a radial leg (26) connected to a hub (28) which is common for all carrier elements and is connectable to the output shaft (23) of the motor (22), and an axial leg (27) that extends rearwardly from the associated radial leg (26) to the region outside the motor, the axial legs forming a cage-like configuration which at least partly encases the motor.

6. Driving roller according to claim 5, **characterized** in that the individual finger (25) is made of bent round bar.

7. Driving roller according to claim 5 or 6, **characterized** in that the individual finger (25) is welded via its radial leg (26) to a ring plate (29) which is common for all fingers and in turn is co-rotatively connected to the output shaft of the hydraulic motor.

## Patentansprüche

1. Fahrgestell zum Antreiben eines Fahrzeugs mit einem Paar von Rädern (9, 10), die Profilreifen aufweisen und jeweils drehbar in Lagern auf einem radtragenden Teil (15, 15'), beispielsweise einem Kastenträger drehbar angebracht ist, der über ein Gelenk relativ zu einem Chassis oder einem Rahmenkörper (8, 11) schwenkbar ist, wobei die Räder in einer von zwei entgegengesetzten Drehrichtungen antreibbar sind und ein Hydraulikmotor (22), der als permanenter und einziger gemeinsamer Antriebsmechanismus für die zwei Räder dient, welcher Motor im Bereich zwischen den Reifen der Räder angeordnet ist und mit seiner Abtriebswelle (23) mit einer Antriebsrolle (24) verbunden ist, wobei mehrere umfangsmäßig getrennte Trägerelemente (25) sich im Antriebseingriff mit den Oberflächenprofilen von jedem der zwei Radreifen befindet, dadurch gekennzeichnet, daß der Hydraulikmotor (22) und die Antriebsrolle (24) in dem Bereich eines oberen Endes eines im wesentlichen vertikal positionierten schwenkbaren Haltearms (19) angebracht sind, der im Bereich seines unteren Endes mit dem Rahmenkörper (11) in einem Gelenk (17) gelenkig verbunden ist, das auf einem Niveau unterhalb der Drehzentren der Räder (9, 10) angeordnet ist.

2. Radfahrgestell nach Anspruch 1, dadurch gekennzeichnet, daß das Gelenk für den Haltearm (19) und das Gelenk für den radtragenden Teil (15) entlang einer gemeinsamen geometrischen Achse (A) angeordnet sind, die relativ zu dem Rahmenkörper (11) feststeht, wobei der Arm (19) außerhalb des radtragenden Teils (15) angeordnet ist.

3. Radfahrgestell nach Anspruch 2, dadurch gekennzeichnet, daß der Rahmenkörper ein U-förmiges Joch (16) aufweist, das nach unten offen ist und zwei in bezug aufeinander getrennte Schenkel (16', 16'') aufweist, zwischen welchen ein Kastenträger (15') aufgenommen ist, welcher den radtragenden Teil bildet, welcher Kastenträger durch Lager relativ zu einem zwischen den U-Schenkeln angeordneten Wellendrehzapfen (17) getragen und schwenkbar in diesen angebracht ist, wobei die Länge des Drehzapfens (17) größer ist als der Abstand zwischen den Schenkeln, um einen Abschnitt (17') bereitzustellen, der vom äußeren Schenkel (16'') vorsteht, auf welchem Abschnitt der Haltearm (19) in Lagern schwenkbar angebracht ist.

4. Radfahrgestell nach Anspruch 2 oder 3, dadurch gekennzeichnet, daß der Haltearm (19) an seinem oberen Ende eine liegende Befestigungsplatte (20) mit einer aufrechten Halterungsplatte (21) aufweist, auf welcher der Hydraulikmotor (22) in liegender Position befestigt ist, wobei die Abtriebswelle (23) des Motors von der Halterungsplatte (21) vorsteht, um die Antriebsrolle (24) an ihrem freien Ende zu tragen.

5. Hydraulikmotor-angetriebene Antriebsrolle für Radfahrgestelle, die zwei Räder mit Reifen aufweisen, die ein Oberflächenprofil haben, wobei die Antriebsrolle mehrere umfangsmäßig getrennte Trägerelemente (25) zum Eingriff mit dem Oberflächenprofil der Reifen aufweist und mit der Abtriebswelle (23) eines Hydraulikmotors (22) zur gemeinsamen Drehung verbunden ist, dadurch gekennzeichnet, daß die Trägerelemente aus im wesentlichen L-förmigen Fingern (25) bestehen, von denen jeder ein radiales Glied (26) aufweist, das mit einer Nabe (28) verbunden ist, die für sämtliche Trägerelemente gemeinsam und mit der Abtriebswelle des Motors (22) verbindbar ist, und ein axiales Glied (27), das sich ausgehend vom zugeordneten radialen Glied (26) zu dem Bereich außerhalb des Motors nach hinten erstreckt, wobei die axialen Glieder eine käfigartige Konfiguration bilden, welche zumindest den Motor einschließt.

6. Antriebsrolle nach Anspruch 5, dadurch gekennzeichnet, daß der einzelne Finger (25) aus einem gebogenen Rundstab hergestellt ist.

7. Antriebsrolle nach Anspruch 5 oder 6, dadurch gekennzeichnet, daß der einzelne Finger (25) über sein radiales Glied (26) an eine Ringplatte (29) geschweißt ist, die für sämtliche Finger gemeinsam ist und mit der Abtriebswelle des Hydraulikmotors zur gemeinsamen Drehung verbunden ist.

## Revendications

1. Demi-bogie à roues d'entraînement d'un véhicule, comprenant une paire de roues (9, 10) qui ont des pneumatiques munis d'une sculpture et qui sont montés chacun afin qu'ils puissent tourner dans des paliers sur une partie de support de roue (15, 15'), par exemple une poutre caisson qui peut pivoter par l'intermédiaire d'un joint par rapport à un châssis ou carrosserie (8, 11), les roues pouvant être menées dans l'un de deux sens opposés de rotation, et un moteur hydraulique (22) utilisé comme mécanisme permanent et unique d'entraînement commun des deux roues, ce moteur étant placé dans la région comprise entre les pneumatiques des roues et ayant son arbre de sortie (23) qui est raccordé à un rouleau menant (24) ayant plusieurs éléments (25) de transport qui sont séparés périphériquement et qui sont en coopération avec la sculpture de la surface de chacun des pneumatiques des deux roues en les entraînant, caractérisé en ce que le moteur hydraulique (22) et le rouleau menant (24) sont montés dans la région de l'extrémité supérieure d'un bras (19) de support qui est pivotant et est disposé en direction pratiquement verticale et qui, dans la région de son extrémité inférieure, est raccordé de manière articulée au châssis (11) par un joint (17) placé à un niveau inférieur à celui des centres de rotation des roues (9, 10).

2. Demi-bogie à roues selon la revendication 1, caractérisé en ce que le joint du bras de support (19) et le joint de la partie (15) de support de roue sont placés le long d'un axe géométrique commun (A) qui est fixé par rapport au châssis (11), le bras (19) étant placé à l'extérieur de la partie de support de roue (15).

3. Demi-bogie à roues selon la revendication 2, caractérisé en ce que le châssis comporte un étrier en U (16) qui est ouvert vers le bas et qui a deux branches séparées (16', 16'') entre lesquelles est logée une poutre caisson (15') formant la partie de support de roue, la poutre caisson est supportée par des paliers sur un tourillon (17) placé entre les branches du U et est montée de manière pivotante dans des paliers disposés sur ce tourillon, la longueur du tourillon (17) étant supérieure à la distance comprise entre les branches afin qu'une partie (17') qui dépasse de la branche externe (16'') soit formée, le bras de support (19) étant monté de manière pivotante dans des paliers sur cette partie.

4. Demi-bogie à roues selon la revendication 2 ou 3, caractérisé en ce que le bras de support (19) à son extrémité supérieure, a une plaque (20) de fixation qui est horizontale et qui est munie d'une plaque verticale de montage (21) sur laquelle est fixé le moteur hydraulique (22) en position horizontale, l'arbre de sortie (23) du moteur dépassant de la plaque de montage (21) afin qu'il porte le rouleau menant (24) à son extrémité libre.

5. Rouleau menant entraîné par un moteur hydraulique et destiné à des demi-bogies à roues du type qui comprend deux roues ayant des pneumatiques munis d'une sculpture de surface, le rouleau menant comprenant plusieurs éléments de transport (25) qui sont séparés périphériquement afin qu'ils coopèrent avec la sculpture de la surface des pneumatiques et raccordés afin qu'ils tournent ensemble sur l'arbre de sortie (23) d'un moteur hydraulique (22), caractérisé en ce que les éléments de transport sont constitués de doigts pratiquement en L (25) ayant chacun une phalange radiale (26) raccordée à un moyeu (28) commun à tous les éléments de transport et qui peut être raccordée à l'arbre de sortie (23) du moteur (22), et une phalange axiale (27) qui s'étend vers l'arrière de la phalange radiale associée (26) vers une région qui se trouve à l'extérieur du moteur, les phalanges axiales formant une configuration analogue à une cage qui entoure au moins partiellement le moteur.

6. Rouleau menant selon la revendication 5, caractérisé en ce que le doigt individuel (25) est formé d'une barre coudée de section circulaire.

7. Rouleau menant selon la revendication 5 ou 6, caractérisé en ce que le doigt individuel (25) est soudé par sa phalange radiale (26) à une plaque annulaire (29) qui est commune à tous les doigts et qui est raccordée à son tour de manière qu'elle tourne en coopération avec l'arbre de sortie du moteur hydraulique.
